# EUROPEAN PATENT APPLICATION

(11) **EP 1 992 941 A1**
(43) Date of publication of application: **19.11.2008**
(21) Application number: 06833402.8
(22) Date of filing: 27.11.2006
(51) Int. Cl.: G01N 27/22, G01N 27/12

(54) **HUMIDITY SENSOR**

(30) Priority: 06.03.2006 JP 2006059620
(71) Applicant: Toplas Engineering Co. Ltd., Chofu-shi, Tokyo 182-0006 (JP)
(72) Inventor: SUZUKI, Kazuhiro, Chofu-shi, Tokyo 1820006 (JP)
(74) Representative: Lusuardi, Werther
(86) International application number: PCT/JP2006/323598
(87) International publication number: WO 2007/102262

(57) **Abstract**

The present invention provides a sensor for humidity which is optimized as moisture sensitive material in basic properties such as long term stability and the like at the range of high temperature. The sensor for moisture according to the present invention is provided with a moisture sensitive film formed with polymer in which a hydrophilic group binds through at least one hydrophobic group to other hydrophilic groups. Basic properties of the sensor such as long term stability and the like is optimized by forming a moisture sensitive element provided with a moisture sensitive film formed with polymer in which the glass transition temperature is in the range of 240°C to 500°C.

## Description

### Field of the invention

The present invention relates to a sensor for humidity in high accuracy, and more specifically to the sensor which principally has the stability in the range of high temperature and high humidity due to figuring out a moisture sensitive mechanism.

### Background of the invention

A demand for even humidity control increases in order to make shipment of plants and products with high quality in maintaining the growing environment of the plant and in managing production lines on a factory.
The sensor for moisture is classified to six kinds due to the measurement principle.
Namely, there are methods for detecting heat of vaporization of water, detecting dew points of the water, calculating due to optical absorption of moisture vapor, detecting expansion and extraction of moisture sensitive materials, detecting changes of electric resistance of the moisture sensitive materials and detecting changes of electric capacitance of the moisture sensitive materials.
In the six detecting methods the two methods are preferable which detect changes of electric resistance or electric capacitance of the moisture sensitive materials taking into account of facility for downsizing sensor element portions, and arithmetic processing for output of the sensor.

For example, in the patent literature 1 a moisture sensitive element is disclosed which has a moisture sensitive film composed principally of polyethersulfon and polysulfon as the moisture sensitive material. In absorbed water quantity this material is lower than celluloseacetatebutyrate and so on, and has a property that difference between moisture sensitive characteristics in moisture absorption process and moisture desorption process is small.

Also, in the patent literature 2, a moisture sensitive element of the type of electrostatic capacitance is proposed in which polyphenylsulfon and electrodes are stacked. According to the patent literature 2, it is possible to provide a moisture sensitive material with a small hysteresis by means of polyphenylsulfon.

Patent literature 1: Official gazette of Japanese published patent (examined) H6-92953.
Patent literature 2: Specification of the U.S. patent No. 6938482.

### Disclosure of the invention

### Problem to be solved by the invention

However, the glass transition temperature is 220°C at the highest in polyethersulfon and polysulfon for the moisture sensitive material according to the patent literature 1 and in polyphenylsulfon(hereinafter called as PPS)for the moisture sensitive material according to the patent literature 2.
Namely, both materials are lower in the glass transition temperature, and further, basic properties such as temperature dependency and long term stability in the range of high temperature are not optimized as the moisture sensitive material.

Also, on the contrary, a demand for humidity measurement at high temperature in the fields of the fuel cell and the automotive engine increases. In the environment of those fields the glass transition temperature more than 220°C is needed. Accordingly, a new sensor for moisture has been desired which is sustainable to humidity measurement at higher temperature, including securement of the decay durability.

Then, the applicant of the present invention has principally been in pursuit of substantial causes on the relationship between the moisture sensitive material and its glass transition temperature in view of higher temperature. As the result, an optimal material has been found out which is provided with basic properties such as the temperature dependency and the long term stability in the range of higher temperature.

Accordingly, the object of the present invention is to provide a sensor for humidity which is optimized as the moisture sensitive material in basic properties such as the temperature dependency, the long term stability and the like in the range of higher temperature.

### Means for solving the problem

According to study of the applicant with all heart, it is primarily preferable to use as the moisture sensitive material for sensing relative humidity, which moisture absorption quantity depends only on relative humidity because, namely, it is impossible to measure humidity correctly in case that the moisture absorption quantity depends on other parameters such as temperature and so on, and necessitates compensation.

In order that the moisture absorption quantity depends only on relative humidity, it is primarily necessary that the binding energy between hydrophilic group in polymer of the moisture sensitive material and water molecule is equal to the binding energy between water molecules.

In polymer, it is sulfonyl group and carbonyl group that the binding energy between hydrophilic group and water molecule is almost equal to that between water molecules in stability. The unsaturated electron pair of oxygen atom in both groups can be in hydrogen bond with the energy almost equal to the binding energy between water molecules.

Secondly, it is necessary for preventing condensation of the water molecule that the hydrophilic group is spaced by hydrophobic group. It is multi-membered ring, in which typical one is phenyl group with bulked structure, that is hydrophobic group without side chains and capable of spacing surely between the hydrophilic groups. Particularly, five membered ring to eight membered ring are preferable. In particular, in case of obtaining multi-membered ring fluoride easily, specifically five membered ring to eight membered ring thereof are preferable.

In polymer with the side chain, the dielectric constant depends greatly on temperature even if it is lower than the glass transition temperature. On the contrary, in polymer without the side chain, the dielectric constant is almost constant up to the glass transition temperature that is advantageous.

Also, the dielectric constant of absorbed water molecule does not depend on temperature, because the hydrophilic group is spaced by hydrophobic group and then prevents condensation of the water molecule which is bound in rotational movement

From the above point of views applicant has invented the following means to achieve the object of the present invention,

According to the first aspect of the present invention, the sensor for moisture of the present invention is provided with a moisture sensitive film formed with polymer in which hydrophilic group binds together through at least one hydrophobic group to other hydrophilic group, the hydrophobic group being composed of multi-membered ring. The hydrophilic group may be sulfonyl group or carbonyl group. Further, the sensor is provided with moisture sensitive film formed with polymer which glass transition temperature is in the range of 240°C to 500°C.

The polymer is characterized in that it includes at least one of unit structures shown by the following formula.

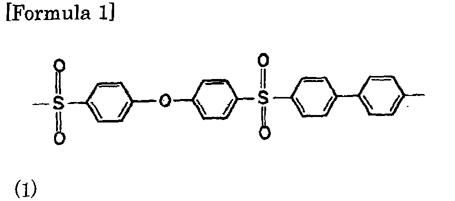

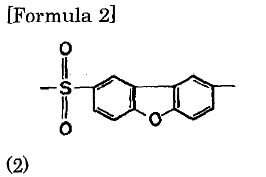

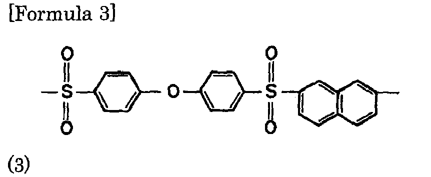

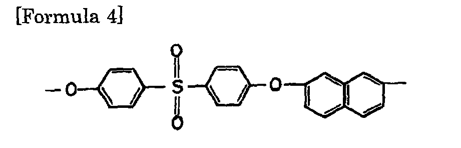

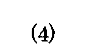

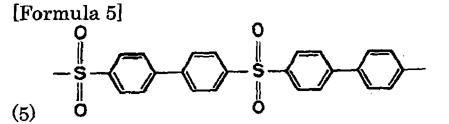

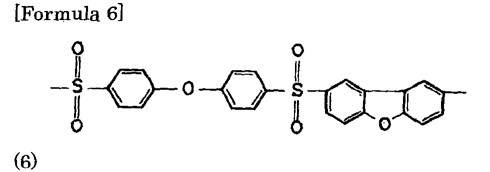

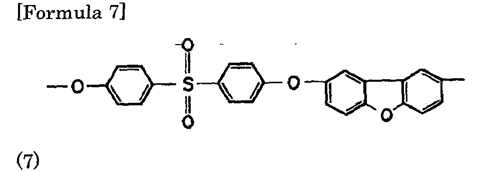

According to the second aspect of the present invention, a semiconductor device of the present invention is provided with a moisture sensitive film formed with polymer in which hydrophilic group binds together through at least one hydrophobic group to other hydrophilic group, the hydrophobic group being composed of multi-membered ring. The hydrophilic group may be sulfonyl group or carbonyl group. Further, the semiconductor device is provided with moisture sensitive film formed with polymer which glass transition temperature is in the range of 240°C to 500°C. The multi-membered ring is preferable to be five membered ring to eight membered ring.

Further, the semiconductor device may be provided with a temperature sensor attached, and with an output circuit of the sensor attached.

### Effect of the invention

According to the first aspect of the present invention, basic properties such as the temperature dependency and the long term stability in the range of higher temperature is optimized, because the sensor for moisture is provided with a moisture sensitive element comprising moisture sensitive film formed with polymer which glass transition temperature is in the range of 240°C to 500°C.

### Brief description of the drawings

[Fig. 1] is a conceptual diagram based on the first illustrative embodiment of a sensor for humidity due to the present invention.
[Fig. 2] shows characteristic between relative humidity and electric capacitance based on the first illustrative embodiment of the sensor for moisture due to the present invention when the sensor for moisture is annealed in the temperature range of 220°C to 380°C.
[Fig. 3] shows characteristic between relative humidity and electric capacitance based on the first illustrative embodiment of the sensor for moisture due to the present invention when the sensor for moisture is annealed at the temperature of 420°C.
[Fig. 4] shows characteristic between relative humidity and electric capacitance based on the conventional product PES at the temperature of 30°C before and after heat run test.
[Fig. 5] shows characteristic between relative humidity and electric capacitance based on the conventional product PAS at the temperature of 30°C before and after heat run test.
[Fig. 6] shows characteristic between relative humidity and electric capacitance based on the first polysulfon due to the present invention at the temperature of 30°C before and after heat run test.
[Fig. 7] shows characteristic between relative humidity and electric capacitance based on the second polysulfon due to the present invention at the temperature of 30°C before and after heat run test.
[Fig. 8] is a top plain view of the second illustrative embodiment of the sensor for moisture due to the present invention.
[Fig. 9] is a longitudinal cross sectional view of the second illustrative embodiment of the sensor for moisture due to the present invention.
[Fig. 10] shows characteristic between relative humidity and electric capacitance based on the example 4 of the second illustrative embodiment of the sensor for moisture due to the present invention.
[Fig. 11] is a top plain view of the example 5 of the sensor for moisture due to the present invention.
[Fig. 12] is an enlarged cross sectional view taken along the line BB' of the example 5 of the sensor for moisture due to the present invention.
[Fig. 13] is a top plain view of the example 6 of the sensor for moisture due to the present invention.
[Fig. 14] is a top plain view of the example 7 of the sensor for moisture due to the present invention.

### Description of notation

- 2: insulating substrate
- 4: lower electrode
- 6: pad for lower electrode
- 8: moisture sensitive film
- 10: upper electrode
- 12: pad for upper electrode
- 14: insulating substrate
- 16: lower electrode
- 18: pad for lower electrode
- 20: moisture sensitive film
- 22: upper electrode
- 24: pad for upper electrode
- 26, 28: pad for electrode
- 30: semiconductor device
- 32: semiconductor substrate
- 34, 36: comb type electrode portion
- 38: moisture sensitive material
- 40: moisture sensitive layer
- 42: upper moisture sensitive film
- 44: output circuit
- 46: pad
- 48: temperature measuring circuit

### Best mode of carrying out the invention

The illustrative embodiment of the present invention will be explained in detail, referring to the drawings.

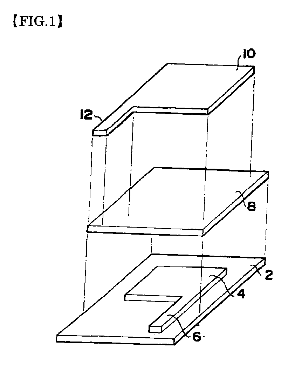

Fig. 1 is a conceptual diagram based on the first illustrative embodiment of a sensor for humidity due to the present invention. In Fig. 1, numeral 2 is an insulating substrate composed of, for example, sintered alumina, soda glass, silicate glass and the like. Numeral 4 is a lower electrode composed of aluminum, gold, palladium, chromium and the like which are deposited on the insulating substrate 2. Numeral 6 is a pad for the lower electrode which is formed in one body connecting with the lower electrode 4 at an area portion forming a pad for electrode on the substrate 2. Numeral 8 is a moisture sensitive film composed of polysulfon (hereinafter called as the first polysulfon) which is polymer resin material and has glass transition temperature at about 260°C, and is represented by the following formula. The polymer resin material is clad so as to cover not only the lower electrode 4, but also a part of the pad 6 for the lower electrode and further the insulating substrate 2.

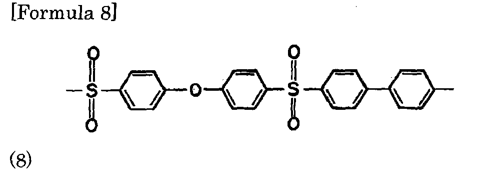

Also, numeral 10 is an upper electrode formed on this moisture sensitive film 8. Numeral 12 is a pad for the upper electrode at the area portion forming a pad for electrode on the moisture sensitive film 8, which is formed extendedly during the same process with the lower electrode 4

Lead wires (not shown) are fastened to the terminal portions of the pad 6 for the lower electrode and the pad 12 for the upper electrode by soldering.

In the sensor for moisture thus constituted, the moisture sensitive film 8 is composed principally of moisture sensitive material of the first polysulfon shown at the formula (8).

Next, the concrete manufacturing process of the sensor for moisture will be explained.

At first powder of the first polysulfon is prepare by the weight of 5∼30 gram, for example. Then, the prepared power is dissolved into N-methylpirrolidinone (hereinafter represented as NMP), and solution of the first polysulfon is obtained. Then, the solution is coated on the lower electrode 4 formed on the insulating substrate 2 by the spin coat method. In the case the rotational speed of the spinner is in the range of 500 to 9000 rpm. After forming a film, the film is annealed more than one hours at the temperature higher than 260°C that is the glass transition temperature of the first polysulfon, for the purpose of solvent removal and distortion relaxation in the film, as the result the moisture sensitive film 8 is obtained.

Next, the upper electrode 10 with the film thickness in the range of 100 nm to 10000 nm is formed on the moisture sensitive film 8 coated with layers on the insulating substrate 2, by the methods such as vacuum evaporation, sputtering, ion plating and the like.

Also, the lower electrode 4 is obtained by forming chromium to a thin film with the thickness of 400 nm to 800 nm using vapor deposition.

In addition, though the first polysulfon is explained in this illustrative embodiment, other polysulfon as shown in the chemical formula below can be also applicable to the embodiment because those have higher glass transition temperatures.

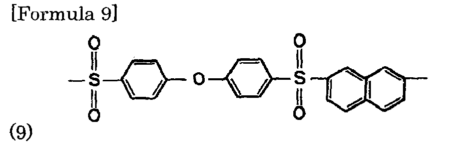

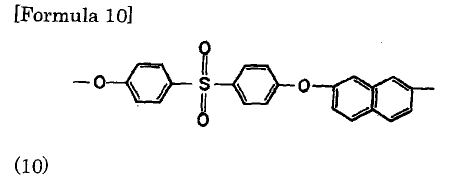

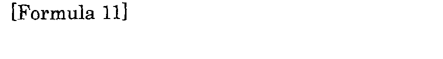

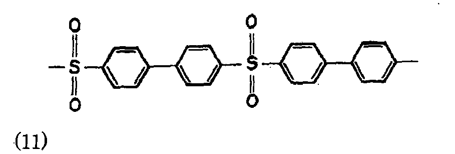

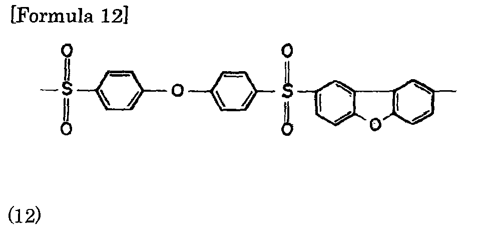

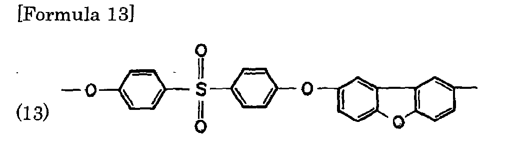

The polymer compounds shown in the formula (9), (10) have the glass transition temperature of 250°C and, it is preferable for the solvent to be dimethylformamide (hereinafter called as DMF), dimethylacetamide (hereinafter called as DMAC).

The polymer compound shown in the formula (11) has the glass transition temperature of 400°C and, it is preferable for the solvent to be phenol at high temperature and NMP.

The polymer compounds shown in the formula (12), (13) have the glass transition temperature of 290°C and, it is preferable for the solvent to be DMF, DMAC.

### Example 1

In addition, the characteristic between relative humidity and electric capacitance is measured when the annealing temperature is changed to the sensor for moisture which makes use of the first polysulfon thus constituted according to the present invention. In detailed condition of the example 1, after the moisture sensitive film is coated, the sensor for moisture is annealed for 18 hours at each temperature of 220°C, 260°C, 300°C, 340°C, 380°C and 420°C, respectively.

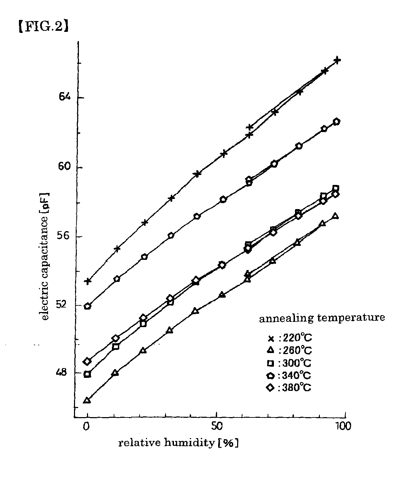

Fig. 2 shows characteristic between relative humidity and electric capacitance when the sensor for moisture is annealed in the temperature range of 220°C to 380°C.

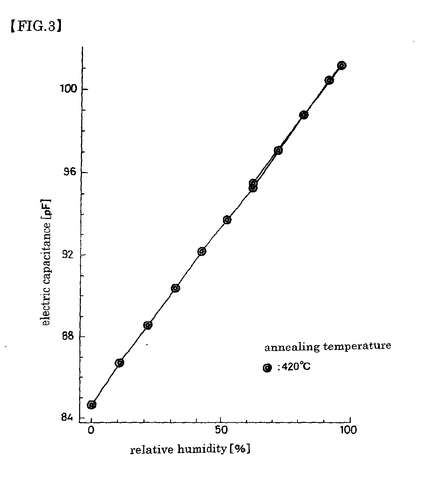

Fig. 3 shows characteristic between relative humidity and electric capacitance when the sensor for moisture is annealed at the temperature of 420°C.

In addition, LCZ meter is used to measure electric capacitance wherein the measuring frequency is 2 MHz, temperature of the testing bath is 30°C. In parallel with the electric capacitance measurement, hysteresis width is also measured which are 3.0, 2.0, 1.5, 1.5, 1.0, 1.0 and 2.0 % in accordance with the annealing temperatures of 220°C, 260°C, 300°C, 340°C, 380°C and 420°C, respectively.

On the contrary, hysteresis width in the sensor for moisture using conventional product of polyethersulfon (hereinafter called as PES) and PPS are measured, which is composed of moisture sensitive film constituted in a similar condition wherein the annealing condition is 100 hours at 260°C. Both of hysteresis width in PES and PPS are 1.0 %.

From the description above, it is shown that the sensor for moisture using the first polysulfon according to the present invention has a small hysteresis equal to PES and PPS, when annealed at the temperatures of 340°C and 380°C.

### Example 2

In the example 2, heat resistance property of the sensor for moisture using the first polysulfon according to the present invention is shown below.
In the example 2, the conventional product of PES, PPS, and the first polysulfon according to the present invention are used as the moisture sensitive material wherein PES, PPS are annealed for 100 hours at the temperatures of 260°C, and the first polysulfon according to the present invention is annealed for 18 hours at the temperatures of 380°C.
Further, heat run test is executed to those sensors after completion as the sensor for moisture.
The condition of the heat run test is to leave the sensors for 240 hours in the atmosphere at the temperature of 200°C.
The characteristic between relative humidity and electric capacitance is measured in the atmosphere at the temperature of 30°C before and after the heat run test.

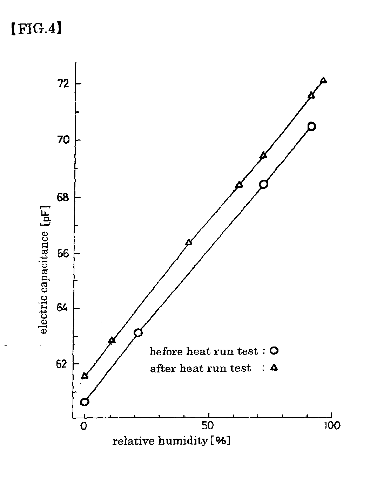

Fig. 4 shows characteristic between relative humidity and electric capacitance of PES at the temperature of 30°C before and after the heat run test.

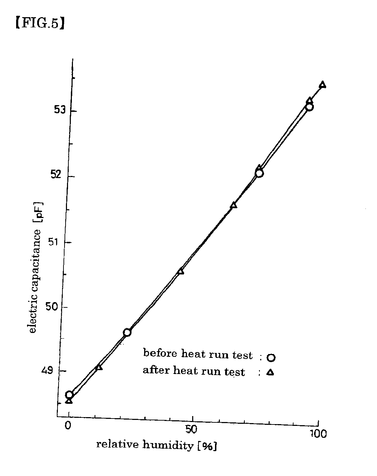

Fig. 5 shows characteristic between relative humidity and electric capacitance of PPS at the temperature of 30°C before and after the heat run test.

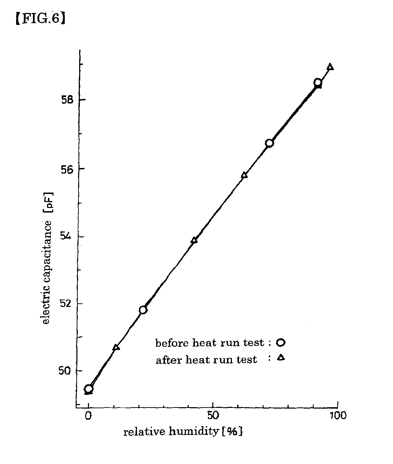

Fig. 6 shows characteristic between relative humidity and electric capacitance of the first polysulfon according to the present invention at the temperature of 30°C before and after the heat run test.

When the maximum value of change in electric capacitance on the example 2 is represented by the width of relative humidity, the first polysulfon according to the present invention is 1.6 % and PPS is 2.1 %, and PES is 9.3 %. Accordingly, it is shown that heat resistance property in the first polysulfon according to the present invention is higher than those of PPS and PES.

### Example 3

Further, the example 3 shows the sensor for moisture using the second polysulfon according to the present invention as shown in the chemical formula below.

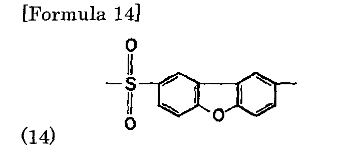

The manufacturing condition for the second polysulfon is constituted in a similar process to the embodiment 1 except the annealing condition of 18 hours at the temperature of 350°C.

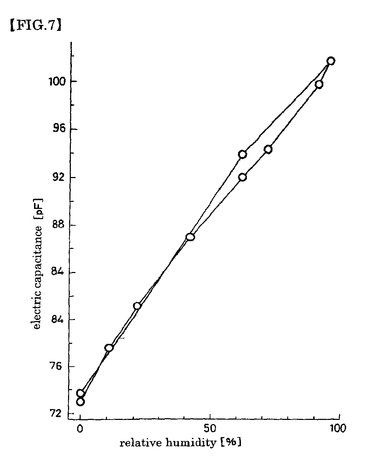

Fig. 7 shows characteristic between relative humidity and electric capacitance based on the second polysulfon constituted by that condition at the temperature of 30°C.
From the result, it is shown that the electric capacitance changes in the range of 72.96 to 101.70 pF in accordance with the change of 0 to 100 % in the relative humidity.
The percentage of change in electric capacitance to the electric capacitance at humidity of 0 % is 40.0 %, which is greatly large compared with 18.0 % in PES, 10.3 % in PPS and 20.3 % in the first polysulfon, and shows that noise tolerant property is high.

### Embodiment 2

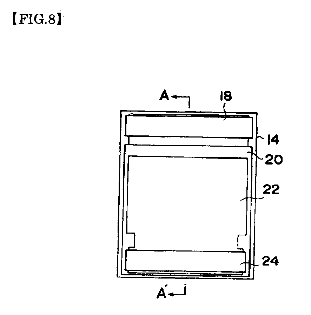

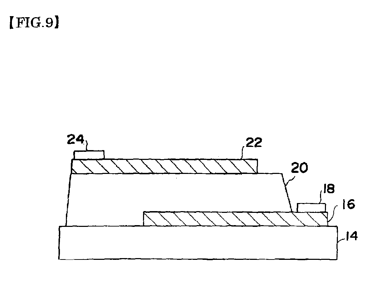

Referring to Fig. 8 and Fig. 9 the embodiment 2 with a surface mounting type (SMT) according to the present invention will be explained.
Fig. 8 is a top plain view of the second illustrative embodiment of the sensor for moisture according to the present invention.
Fig. 9 is a longitudinal cross sectional view of Fig. 8.

As shown in Fig. 9 numeral 14 is an insulating substrate composed of, for example, sintered alumina, soda glass, silicate glass and the like. Numeral 16 is a lower electrode composed of aluminum, gold, palladium, chromium and the like which is deposited on the upper surface of the insulating substrate14. Numeral 18 is a pad for the lower electrode16 which is formed adherently by evaporation coating in the area portion forming a pad for electrode on the substrate 14. Numeral 20 is a moisture sensitive film formed adherently so as to clad not only the lower electrode 16, but also the insulating substrate 14. The moisture sensitive film is composed of the first polysulfon having glass transition temperature of 260°C shown by the following formula.

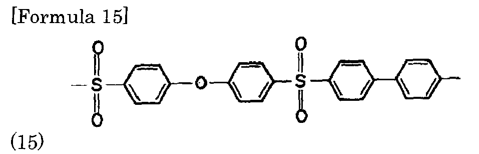

Also, numeral 22 is an upper electrode formed on the moisture sensitive film 20. Numeral 24 is a pad for the upper electrode 22 formed by evaporation coating in the area portion forming a pad for electrode as in the pad 18 for lower electrode.

### Example 4

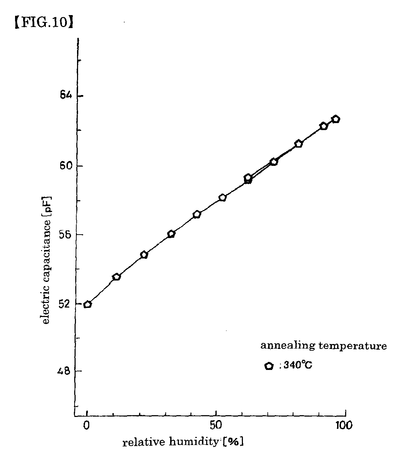

A sensor for humidity is manufactured based on the second embodiment. Fig. 10 shows characteristics between relative humidity and electric capacitance wherein measuring temperature is 30°C.

### Embodiment 3

The third illustrative embodiment (hereinafter called as the first semiconductor device) mounted on a semiconductor substrate will be explained, which is a sensor for humidity according to the present invention.

### Example 5

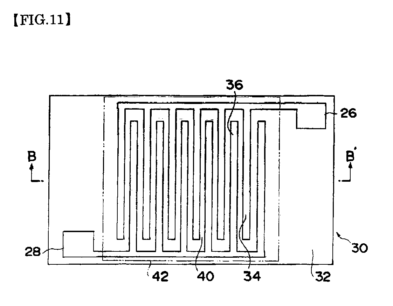

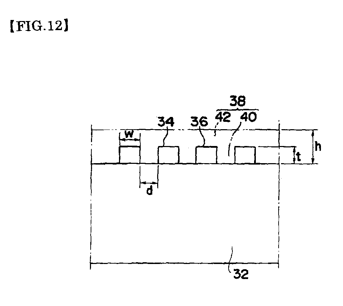

Referring to Fig. 11 and Fig. 12 the example 5 will be explained.
Fig. 11 is a top plain view of the first semiconductor device.
Fig. 12 is an enlarged cross sectional view taken along the line BB' of Fig. 12.

In this semiconductor device 30 anyone of one pair of electrodes with the thickness of (t), as described below, is allocated fixedly on the semiconductor substrate 32.

Then, wide electrode pads 26 and 28 are located at each end of one pair of electrodes, and the other each end are divided into a plurality of comb-like teeth wherein the respective comb-like teeth portions 34, 36 for electrodes are placed opposite one after the other with the face to face dimension (d).

Also, the moisture sensitive layer 40 with the face to face dimension (d) is formed by filling the moisture sensitive material 38 among the comb-like teeth portions 34, 36 for electrodes.
On the contrary, the upper moisture sensitive film 42 is formed in the upper portion of the comb-like teeth portions 34, 36 for electrodes to clad them.

Accordingly, the moisture sensitive material 38 is filled among the comb-like teeth portions 34, 36 for electrodes, thereby forming the moisture sensitive layer 40 wherein a longitudinal condenser is formed on the semiconductor substrate 32, which is formed by the comb-like teeth portion 34, the moisture sensitive layer 40 and the comb-like teeth portion 36.

In this semiconductor device, it is possible to employ GaAs, SiC, Ge and the like besides silicon, and other compound semiconductors as the semiconductor substrate 32.

Also, it is possible to employ combinations of unit structure shown in the chemical formula (1) to (15) as the moisture sensitive material. Further, it is possible to employ silicon, SiC, gallium arsenide and polysilicon besides aluminum, gold, palladium and chromium as the electrode.

Further, the width of the comb-like teeth portions 34, 36 for electrodes is defined as "w" in the horizontal direction, and the height of the upper surface of the comb-like teeth portions 34, 36 for electrodes from the surface of the semiconductor substrate is defined as "t", and the face to face dimension of the opposite comb-like teeth portions 34, 36 is defined as "d", and further the thickness from the surface of the semiconductor substrate 32 to the surface of the upper moisture sensitive film 42 is defined as "h".

Here, it is preferable that the width "w" is in the range of 0.05 to 2.5 µm, the height "t" is in the range of 0.02 to 2.5 µm, the face to face dimension "d" is in the range of 0.2 to 2.5 µm, and the height "h" is in the range of t +(0.1 to 3.0) µm.

### Example 6

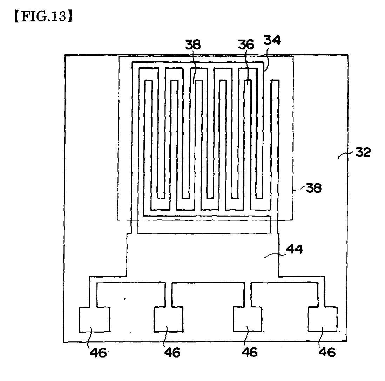

The example 5 is the semiconductor device composed of a simple body of the sensor, which is the sensor for moisture according to the present invention and is mounted on the semiconductor substrate. On the contrary, Fig. 13 is a top plan view of a circuit layout of a semiconductor device in which unlike the example 5, an amplifier circuit or a modulation circuit and the like is located in parallel with the sensor for moisture, wherein the same numeral with that in the example 5 corresponds to the same element with that in the example 5.
Here, the numeral 44 designates a sensor output circuit of semiconductor circuit and the like constituted by the oscillation circuit, the modulation circuit, the amplifier circuit and the like which are conventionally used. The pad 46 is connected to the output signals, the electric source and the earth ground.
Other constituent elements are not different from those in the example 5. In this way the sensor signals can be output without connecting to circuits outside.

### Example 7

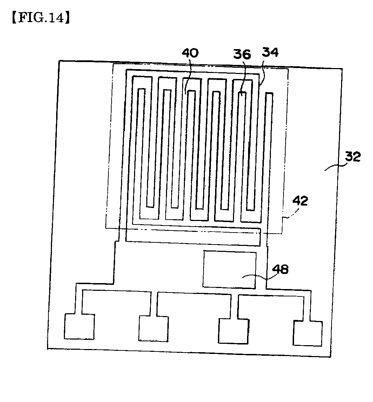

The example 7 (Fig. 14) shows a temperature measurement circuit 48 further mounted on the example 5 which is the sensor for moisture according to the present invention and is mounted on the semiconductor substrate.

Other constituent elements are not different from those in the example 5. It is easily possible to execute temperature compensation to the measurement result of the sensor for moisture by means of mounting both of sensors for moisture and temperature.
In detail, preliminary measured temperature values is stored in a memory of the semiconductor circuit device, and then humidity compensation values is formed in the memory corresponding to each measured temperature.
Accordingly, it is possible to measure humidity correctly by combining the humidity measured through the sensor for moisture and the humidity compensation values corresponding to the temperature actually measured by the temperature sensor.

### Availability on industry

The sensor for moisture according to the present invention is optimized as the moisture sensitive material in basic properties such as the long term stability and the like in the range of higher temperature compared with the conventional sensors.
Accordingly, it is possible to measure humidity with high accuracy in the high temperature environment such as the automotive engine, the fuel cell and the like in which humidity measurement was difficult in the past.

## Claims

1. A sensor for humidity provided with a moisture sensitive film formed with polymer in which a hydrophilic group binds through at least one hydrophobic group to other hydrophilic groups, wherein said hydrophobic group consists of multi-membered ring.

2. The sensor for moisture according to claim 1, wherein said hydrophilic group is a carbonyl group.

3. The sensor for moisture according to claim 1, wherein said hydrophilic group is a sulfonyl group.

4. The sensor for moisture according to any one of claims 1 to 3, wherein the glass transition temperature of said sensor is in the range of 240°C to 500°C.

5. The sensor for moisture according to claim 4, wherein said polymer includes at least any one of unit structures represented by formula below:

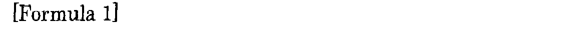

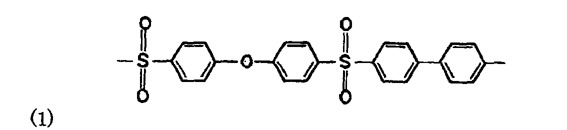

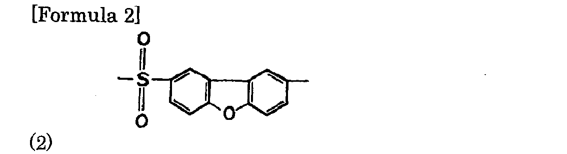

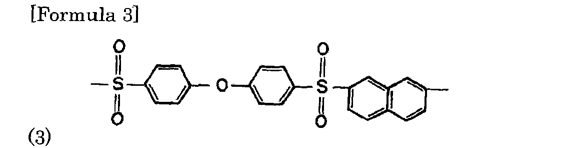

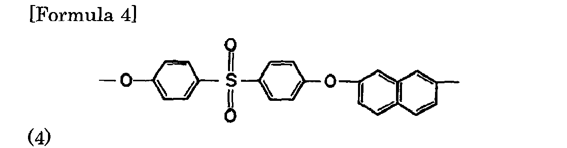

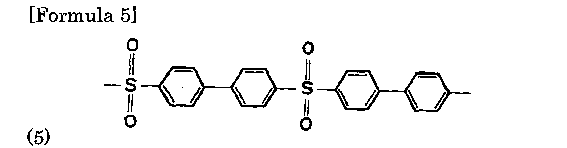

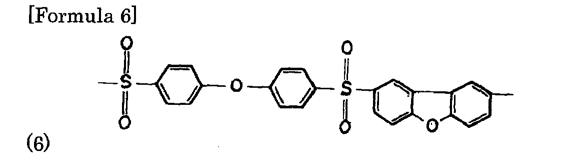

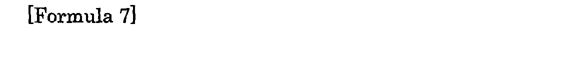

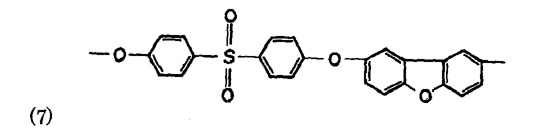

6. A semiconductor device provided with a moisture sensitive film formed with polymer in which a hydrophilic group binds through at least one hydrophobic group to other hydrophilic groups, wherein said hydrophobic group consists of multi-membered ring.

7. The semiconductor device according to claim 6, wherein said hydrophilic group is a carbonyl group.

8. The semiconductor device according to claim 6, wherein said hydrophilic group is a sulfonyl group.

9. The semiconductor device according to any one of claims 6 to 8, wherein the glass transition temperature of said semiconductor device is in the range of 240°C to 500°C.

10. The semiconductor device according to claim 9, wherein said polymer includes at least any one of unit structures represented by formula below:

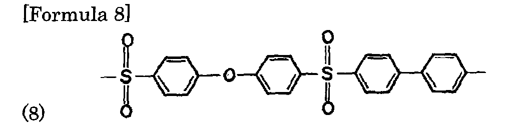

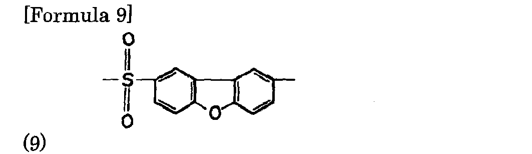

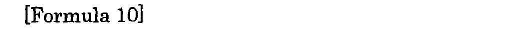

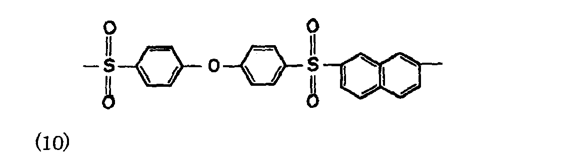

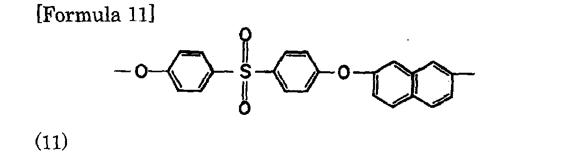

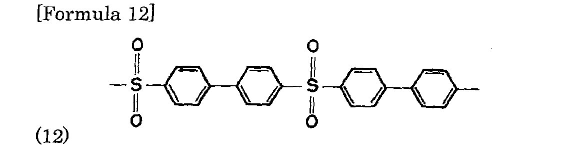

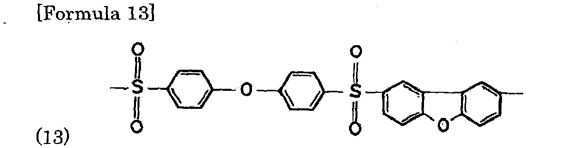

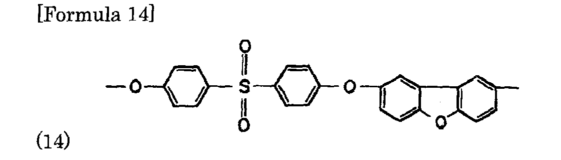

11. The semiconductor device according to any one of claims 6 to 10, wherein a sensor for temperature is also attached in said semiconductor device.

12. The semiconductor device according to any one of claims 6 to11,

## Amended claims

### Amended claims under Art. 19.1 PCT

**1.** (amended) A sensor for humidity provided with a moisture sensitive film formed with polymer in which a hydrophilic group binds through at least one hydrophobic group to other hydrophilic groups, wherein said hydrophobic group consists of multi-membered ring, wherein the glass transition temperature of said polymer is in the range of 240°C to 500°C and wherein said polymer includes at least any one of unit structures represented by formula below.

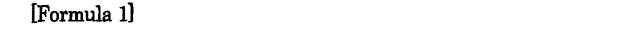

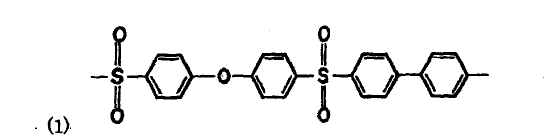

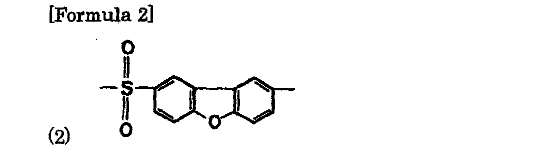

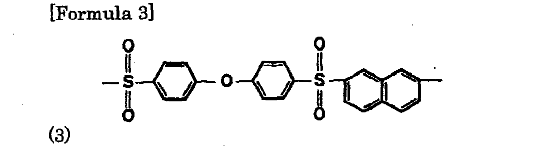

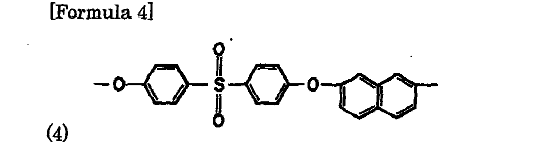

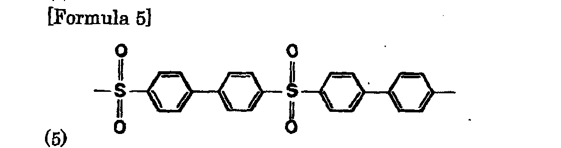

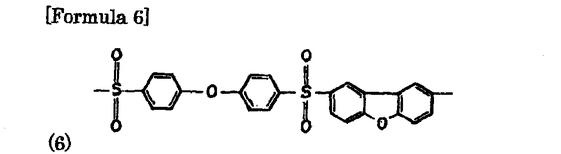

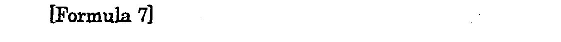

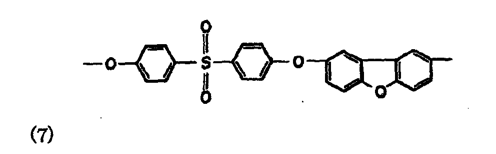

**2.** (deleted)

**3.** (deleted)

**4.** (deleted)

**5.** (deleted)

**6.** (amended) A semiconductor device provided with a moisture sensitive film formed with polymer in which a hydrophilic group binds through at least one hydrophobic group to other hydrophilic groups, wherein said hydrophobic group consists of multi-membered ring, wherein the glass transition temperature of said polymer is in the range of 240°C to 500°C and wherein said polymer includes at least any one of unit structures represented by formula below.

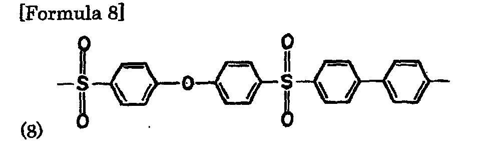

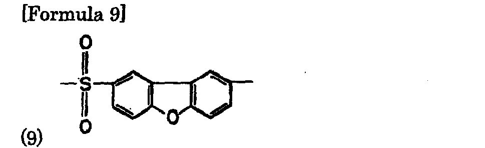

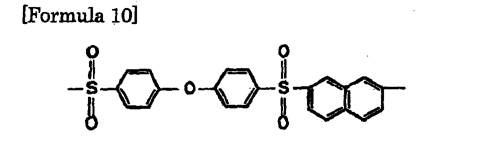

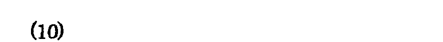

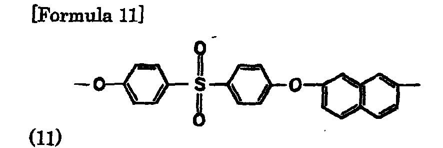

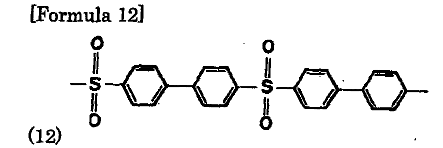

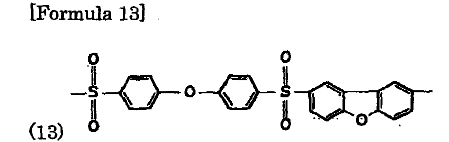

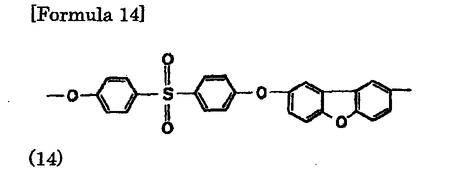

**7.** (deleted)

**8.** (deleted)

**9.** (deleted)

**10.** (deleted)

**11.** (amended) The semiconductor device according to claims 6, wherein a sensor for temperature is also attached in said semiconductor device.

**12.** (amended) The semiconductor device according to claims 6 or 11, wherein an output circuit of said sensor is also attached in said semiconductor device.
